(19) Europäisches Patentamt
European Patent Office
Office européen des brevets

(11) EP 4 443 358 A1

(12) EUROPEAN PATENT APPLICATION

(43) Date of publication:
**09.10.2024 Bulletin 2024/41**

(21) Application number: **23305499.8**

(22) Date of filing: **06.04.2023**

(51) International Patent Classification (IPC):
***G06Q 10/063*** *(2023.01)* ***G06Q 50/04*** *(2012.01)*

(52) Cooperative Patent Classification (CPC):
**G06Q 10/063; G06Q 50/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Dassault Systèmes**
**78140 Vélizy-Villacoublay (FR)**

(72) Inventors:
- **TLILI, Ali**
  **78140 Vélizy-Villacoublay (FR)**
- **KHALED, Oumaima**
  **78140 Vélizy-Villacoublay (FR)**

(74) Representative: **Bandpay & Greuter**
**11 rue Christophe Colomb**
**75008 Paris (FR)**

# (54) SELECTING MATERIALS OF COMPONENTS OF A PRODUCT TO BE MANUFACTURED

(57) The disclosure notably relates to a computer-implemented method for selecting materials of components of a product to be manufactured. The method comprises providing a set of materials for the components of the product. The method also comprises providing, for each component, a set of use and/or manufacturing and/or material constraints for the component. The method also comprises providing, for the product, a set of use and/or manufacturing constraints for the product. The method also comprises providing, for the product, one or more material compatibility constraints. The method also comprises providing specifications. The specifications indicate an extent of compatibility of one or more reference materials within the set of materials with the constraints. The method also comprises determining, for each component of the product, at least one optimal material, with respect to compatibility with the constraints and based on the provided specifications, for manufacturing the component.

EP 4 443 358 A1

## Description

### TECHNICAL FIELD

The disclosure relates to the field of computer programs and systems, and more specifically to a method, system and program for selecting materials of components of a product to be manufactured.

### BACKGROUND

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

Within this context, there is a need for improved solutions for selecting materials for a product to be manufactured.

### SUMMARY

It is therefore provided a computer-implemented method for selecting materials of components of a product to be manufactured. The method comprises providing a set of materials for the components of the product. The method also comprises providing, for each component, a set of use and/or manufacturing and/or material constraints for the component. The method also comprises providing, for the product, a set of use and/or manufacturing constraints for the product. The method also comprises providing, for the product, one or more material compatibility constraints. The method also comprises providing specifications. The specifications indicate an extent of compatibility of one or more reference materials within the set of materials with the constraints. The method also comprises determining, for each component of the product, at least one optimal material, with respect to compatibility with the constraints and based on the provided specifications, for manufacturing the component.

The method may comprise one or more of the following features:

- the determining of the optimal materials for the components comprises learning a Multiple Criteria Decision Aiding sorting model configured to take as input the set of materials and to output the optimal materials for the components, the learning being based on the set of materials, on the constraints, and on the specifications;
- the specifications form a learning set of the model;
- the model includes one or more Non-Compensatory Sorting (NCS) models;
- the learning comprises encoding learning clauses based on the constraints, the encoding using a SAT-based encoding;
- the specifications comprise incompatible specifications, and the learning includes finding a compromise between the incompatible specifications;
- the learning comprises encoding learning clauses based on the constraints, the encoding using a MaxSAT-based encoding;
- finding a compromise comprises iteratively modifying the learning set until reaching an extent of compatibility between the specifications;
- the incompatible specifications are provided by different users;
- the specifications are provided by one or more users;
- one or more constraints are latent constraints; and/or
- the method further comprises using the determined optimal materials for manufacturing the components.

It is further provided a computer program comprising instructions for performing the method.

It is further provided a computer-readable data storage medium having recorded thereon the computer program.
It is further provided a computer system comprising a processor coupled to a memory (and optionally a graphical user interface), the memory having recorded thereon the computer program.

## BRIEF DESCRIPTION OF THE DRAWINGS

Non-limiting examples will now be described in reference to the accompanying drawings, where:

- FIG.s 1 to 13 illustrate the method; and

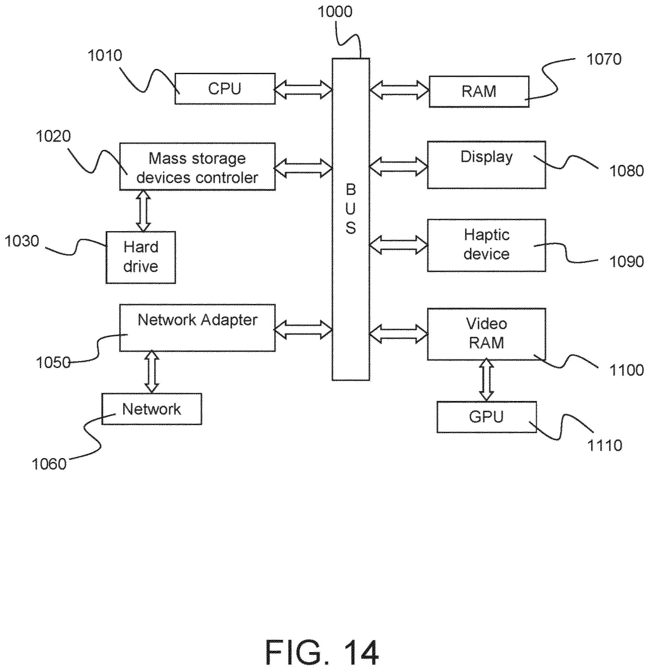

- FIG. 14 shows an example of the system.

## DETAILED DESCRIPTION

It is proposed a computer-implemented method for selecting materials of components of a product to be manufactured. The method comprises providing a set of materials for the components of the product. The method also comprises providing, for each component, a set of use and/or manufacturing and/or material constraints for the component. The method also comprises providing, for the product, a set of use and/or manufacturing constraints for the product. The method also comprises providing, for the product, one or more material compatibility constraints. The method also comprises providing specifications. The specifications indicate an extent of compatibility of one or more reference materials within the set of materials with the constraints. The method also comprises determining, for each component of the product, at least one optimal material, with respect to compatibility with the constraints and based on the provided specifications, for manufacturing the component.
This constitutes an improved selection for material selection for a product to be manufactured.
Indeed, given a product to be manufactured and formed by several components, and given an input set of materials (*i.e.* the provided set of materials) and constraints related to the product and its components (*i.e.* the provided constraints concerning manufacturing, use, and/or material), the method finds, for each component of the product, at least one (*e.g.* one) material of the set which is optimal, with respect to satisfaction of/compatibility with the constraints and the provided specifications, for manufacturing the component (that is, given the constraints and the provided specifications, the determined material is found to be the optimal one for manufacturing the component, and thus the product). This means that the output is made of materials (*i.e.* at least one material, for example one, for each component) selected within the provided set of materials and found to be optimal for manufacturing the components (*i.e.* with the determined optimal material for each component) and thus the product, where optimality is with respect to satisfaction of the provided constraints and specifications. The output materials may for example be or include a list of these materials, for example with each material associated to the component for which the material was found optimal, or a list of pairs each formed by one component and its associated optimal material(s). The method thus allows the objective selection of multiple materials for multiple components forming a product, the materials thereby selected being optimal, given the constraints, for manufacturing the components and thus the product.
The constraints provided by the method, which forms inputs of the method and of the determination of the optimal materials, comprise constraints related to the product and/or components thereof during use (referred to as use constraints), constraints related to the manufacturing of the product and/or components thereof (referred to as manufacturing constraints), and/or constraints related to materials forming the components (referred to as material constraints). The constraints also include constraints constraining compatibilities and incompatibilities of the materials of the components (referred to as material compatibility constraints). In other words, some materials of the provided set of materials are compatible with constraints (for example related use or manufacturing) of some component(s), while other materials are not but are compatible for other components. Some materials may satisfy constraints related to the product and other may not. Some materials may be incompatible for being part of the same product, even if individually at the components level, they are suited for some components. The method thus finds, within the provided materials, those which are accepted for manufacturing the components and thus the product given their compatibility with all the provided constraints.
As outlined above, the method considers constraints both at the level of the components and at the level of the product, that is constraints that concern the components individually and constraints that concern the whole product. The method notably accounts for material compatibility constraints. All of this improves the material selection, as materials may for example well be accepted individually for some components but found to be incompatible when used together in a same product. The method thus improves the selection of materials for manufacturing a product formed by several components, since considering the constraints at both the product level and the component level allows to obtain the optimal materials not only for the product, but for each component as well. The material selection provided by the method has thus improved reliability, which allows to manufacture the product (using the determined optimal materials) with improved reliability as well, and so that the reliability of the product is as well improved.

Finding the appropriate components materials given the constraints, that is finding the best components materials to meet the constraints, may in practice be complicated or even infeasible for the user/designer. Such selection problem may indeed in practice depend on many parameters (e.g. best theoretical material vs material availability in practice, compatibility of materials with the available manufacturing machines), and thus may require to perform an extensive objective classification task which is not feasible by hand or mentally. The method however objectively finds these components materials which are optimal with respect to compatibility with the constraints, and thereby credibly and objectively assists the designer for selecting the appropriate materials for manufacturing the components and thus the product given the constraints.

Furthermore, the determination of the optimal components materials is based on the provided specifications, which indicate an extent of compatibility of one or more reference materials (*i.e.* which are within the provided set of materials) with the constraints. In other words, the provided specifications guide the determination of the optimal components materials by providing reference data regarding the materials and constraints compatibility. This allows a user, or several users, e.g. the designer(s)/engineer(s) that work on the product, to provide their specifications, thereby feeding the method with objective guiding data for selecting the best materials. The method determines the optimal materials that meets at least to some extent these user-provided inputs. The method thus provides a solution to objectively and credibly assist and guide a designer or a group of designers through the components material selection problem for manufacturing the product.

The output of the method comprises the materials determined as optimal for manufacturing the components and thus the product, for example a list of these materials in association with their corresponding components or a list of pairs components-associated determined optimal material(s), as discussed above. These materials may for example by outputted with a label "accepted". The output of the method is thus data describing the components materials determined as optimal for manufacturing the components. The output of the method may thus be used for manufacturing the components with their optimal materials, and thus for manufacturing the product.

The output of the method thus forms the basis of an implied further use of the output, which is the real-world manufacturing of the components, and thus of the product, using the determined optimal materials, where each component is manufactured according to its corresponding determined optimal material. The method may thus form or be part of a design and/or manufacturing process. The method may for example form a material selection step that is performed after a design process and before a manufacturing process where manufacturing is performed in accordance with the optimal materials determined by the method. The method may for example further comprise (*i.e.* further to the determination of the optimal materials) using the determined optimal materials for manufacturing the components (and optionally the product), *i.e.* where for each component, the material determined by the method to be optimal for the component is used for manufacturing the component, and optionally where the components are suitably assembled to form the product. Using the optimal materials for manufacturing the product designates any actions or series of actions that is/are involved in/participate to the manufacturing of the product via the manufacturing of its components using the optimal materials. Using the optimal materials for manufacturing the components may comprise one or more of the following:

- selecting one or more manufacturing processes and/or one or more manufacturing machines suited for manufacturing the components (and optionally the product) using the optimal materials;
- performing one or more simulations of the product and/or of the components while accounting for the optimal materials, to test the performances of the product and its components manufactured with the optimal materials (e.g. structural simulations, or thermodynamics simulation);
- creating a CAM (computer-aided manufacturing) file for manufacturing the components, and optionally the product, the CAM file including specifications of the optimal materials for the components; and/or
- manufacturing the product or its components (*e.g.* and then the product) using the optimal material(s), for example by automatically feeding the CAM file to one or more suitable manufacturing machines.

The method is for selecting materials of components of a product to be manufactured. This means that the method is a method for performing a selection of materials so that, for each component of the product (which comprises several components), at least one material is selected for the component. As previously discussed, this materials selection may be a step of a design and/or manufacturing process, *e.g.* may follow a design step of the process and/or precede a manufacturing step of the process.

Materials selection relates to the selection the most appropriate materials for engineering applications. Material selection is an important function in the design and development of products. Indeed, several dimensions of the design problem are influenced by the used materials including the product central function, the customer satisfaction, the production systems used for manufacturing, the product life cycle, who is going to use or produce it, the usability, and finally the costs (as discussed in Ali Jahan, Kevin L. Edwards, Marjan Bahraminasab, "Materials selection in the context of design problem-solving", Butterworth-Heinemann, 2016, Pages 25-40, which is incorporated herein by reference).

Materials selection can be carried out either to choose alternative materials for changes to the design of an existing product in order to reduce say cost or weight, meet new legal requirements, overcome failure occurrence, and satisfy different market demands or to choose materials for the design of a completely new product. As stated in Jahan, Ali, and Kevin L Edwards, "Multi-Criteria Decision Analysis for Supporting the Selection of Engineering Materials in Product Design", Oxford: Elsevier Science & Technology, 2013. Web, which is incorporated herein by reference, it has been estimated that the relative cost of a design changes after manufacture is 10,000 times more than at the conceptual stage of design, thus, an intelligent decision support tool such as the method of the present disclosure is relevant for materials selection in order to reduce costs. Material selection within the product design process may be either cost driven or performance driven. For example, a performance-driven could be a bespoke biomedical prosthesis/ implant or a tennis racquet and an example of cost-driven could be a mass-produced motorcar or beverage can/bottle. Furthermore, when it comes to a multi-component product to be manufactured, such as the one contemplated in the method, changing the material of one component may entail several changes in the neighboring components. For example, replacing steel with aluminum may cause galvanic corrosion with the neighboring steel components (as discussed in Farag, M.M., 2002, "Quantitative methods of materials selection",. In: Kutz, M. (Ed.), Handbook of Materials Selection. London, John Wiley & Sons, which is incorporated herein by reference). A component-by-component materials selection procedure might lead to a suboptimal solution, therefore, selecting the optimal material mix for the different components of a product is not trivial (as discussed in reference Leite, M., Silva, A., Henriques, E. et al., "Materials selection for a set of multiple parts considering manufacturing costs and weight reduction with structural isoperformance using direct multisearch optimization", Struct Multidisc Optim 52, 635-644 (2015), which is incorporated herein by reference).

The method comprises providing, as inputs to the determining step, the set of materials, the constraints (for each component and for the product), and the specifications. These inputs are now discussed.

The provided set of materials consists in data (*i.e.* numerical data) describing a set of one or more real-world materials. In other words, the provided set of materials is a numerical set of materials, that is a numerical description of the real-world set of materials. For the sake of efficiency, the set of one or more real-world materials and the corresponding provided (numerical) set of materials may be used interchangeably in this disclosure. The set of materials may comprise available and/or usable materials for a factory, or several factories, in charge with the manufacturing of the product and/or its components and/or materials known to the designer(s)/engineer(s) using the method and/or other materials known in the industry (for example stemming from a material database). The set of materials may be a list of materials, *e.g.* a numbered list of materials. The set of materials may be provided by one or more users, *e.g.* one or more designers/engineers using the method. Providing the set of materials may for example comprise, by the user(s), selecting the materials in a material database. The method may alternatively provide automatically a fixed (non-modifiable) set of materials, *e.g.* that stems from a material database. Yet alternatively, the method may provide automatically a fixed subset of materials which a user, or several, completes with its (resp. their) own material selection. Providing the set of materials may comprise, providing, for each material and each constraint, a score (also referred to as "evaluation") of the material on the constraint. This may be done by one or more users, or the materials may be provided automatically with these scores fixed and non-modifiable (*e.g.* the scores may stem from a material database). The provided set of materials may be a large dataset. As mentioned in references Dieter, G.E., 1997, "Overview of the Materials Selection Process", ASM Metals Handbook, Materials Selection and Design. ASM International, Materials Park, OH, and Jahan, Ali & Edwards, Kevin & Bahraminasab, Marjan, (2016), "The importance of decision support in materials selection", 10.1016/B978-0-08-100536-1.00001-1, which are both incorporated herein by reference, there are an enormous number of materials available, each with a range of different properties and behaviors. In case where a user oriented support system is provided, a real time selection is demanding, which makes the computation time demanding.

The constraints include constraints related to the component (which may be referred to as "component-oriented constraints") and constraints related to the product (which may be referred to as "product-oriented constraints"). The constraints may also be referred to as "requirements".

For each component, the constraints include a set of use and/or manufacturing and/or material constraints (*i.e.* a set of one or more of such constraints) for the component. A use constraint for a component is a constraint during use of the component once fabricated, such as a certain required stiffness, or a certain required heat conduction capacity. A manufacturing constraint for a component is a constraint related to the fabrication of the component, such as a certain ability to be bent or a certain drying time. A material constraint for a component is a constraint on the material to be used for the component, such as a mandatory choice of material or type of material (*e.g.* metal) or a desired material property (*e.g.* being waterproof). The constraints may also be referred to as "attributes". The set of constraints may be divided into rigid constraints, which necessarily have to be met by the optimal material for the component, and soft constraints, which do not have to be necessarily met by the optimal material. The determination of the optimal materials by the method may require satisfaction of the rigid constraints and maximization of the satisfaction of the soft constraints. The set of constraints may further include one or more economic constraints. In examples, the set of constraints does not include these economic constraints.

For the product, the constraints include as well a set of use and/or manufacturing constraints for the product (*i.e*. a set of one or more of such constraints). A use constraint for a product is a constraint during use of the product once fabricated, such as a certain required stiffness, or a certain required heat conduction capacity. A manufacturing constraint for a product is a constraint on/ related to a fabrication of the product. The constraints may also be referred to as "attributes". The set of constraints may be divided into rigid constraints, which necessarily have to be met by the materials of the component forming the product, and soft constraints, which do not have to be necessarily met by these materials. The determination of the optimal materials by the method may require satisfaction of the rigid constraints and maximization of the satisfaction of the soft constraints. The set of constraints may further include one or more economic constraints. In examples, the set of constraints does not include these economic constraints.

For the product, the constraints further include one or more material compatibility constraints. A material compatibility constraint is a constraint that describes that two (or more) materials must or can, or must not or cannot, be used for manufacturing two (or more) components of the product and/or two (or more) interacting components. Such constraint thus enforces rejection or the acceptation of such combination of materials for these components of the product by the step of determining the optimal materials. Such constraint may be specific to the product (*i.e.* the combination is excluded or accepted for reasons, *e.g.* use or manufacturing reasons, related to the product) or specific to the materials (*i.e*. the combination is simply excluded or accepted *per se* because the materials can/must or cannot/must not be used together and/or in proximity to one another). The material compatibility constraint(s) may include or consist in a compatibility matrix between materials and the product constraints (e.g. budget constraint, interdependencies between materials, and/or logic constraints). An example of two materials that are not compatible in a knee prosthesis is the use of aluminum and titanium in the articulating components. While both metals are commonly used in prosthetic manufacturing, the use of aluminum and titanium in direct contact in the articulating components can cause a galvanic reaction, leading to corrosion.

One or more constraints (*i.e*. for the components and/or for the product) may be latent constraints. This means that the method does not know in advance whether such a constraint is to be maximized, minimized, or minimized below or above a peak, or maximized above or below a peak. The latent constraints may include constraints of one or more of the following three types of latent constraints (also referred to as latent requirements preferences): monotonous latent constraints, single-peaked constraints, and single-valley constraints. Monotone latent constraint is the case where the preference directions (maximization or minimization) on the constraint are not known (e.g. optical properties). Single-peaked constraint is interpreted as a constraint to be maximized bellow a peak $\alpha$ and as a constraint to be minimized above the peak $\alpha$. Single-valley constraint can be interpreted as a constraint to be minimized bellow a peak $\beta$ and as a constraint to be maximized above the peak (e.g. thermal and radiation properties). The method handles the latent constraints through the determination of the optimal materials using the provided specifications: the method determines the optimal materials using the provided specifications and, while determining the optimal materials, finds for each latent constraint, whether the constraint is to be maximized, minimized, or minimized below or above a peak, or maximized above or below a peak. The method may for that learn one or more NCS models as discussed hereinafter, wherein the method learns the specificities of the latent constraints while the method learns the parameters of the NCS model(s). An example of a relevant criterion in material selection for which it is not clear whether to maximize or minimize is the hardness of the material. Hardness is an important physical property that can affect the strength and durability of a material. In the manufacture of dental prostheses, hardness is an important criterion for the strength and durability of the material. However, excessive hardness can also make the material difficult to work with and can cause damage to the tools used to machine it.

The set of constraints may include numerical constraints, which express the absolute measure of a material property or behavior with respect to a component. Examples of numerical requirements are density, modulus, strength and thermal conductivity. The set of constraints may additionally or alternatively include nonnumerical constraints, which regroup material properties that are not expressed numerically such that resistance to corrosion which can be represented as linguistic variable (e.g., poor, adequate, good). The method thus handles both constraints.

The set of constraints (*i.e*. for the components and/or for the product) may be provided by one or more users of the method, *e.g*. one or more designers or engineering. For example, the user(s) may select the provided constraints by graphical interaction with a displayed list of constraints, for example by checking (*e.g.* with a mouse click or a touch) displayed checkboxes each corresponding to a respective constraints. This may include selecting one or more latent constraints, i.e. constraints selected without knowing whether they are to be minimized or maximized for example. The method may comprise, further to the providing of the constraints, displaying the evaluations/scores of the materials on the provided constraints, for example as an array-like/table display of all the scores (which may be referred to as a "the performance table"), with the materials as lines (resp. columns) and the constraints as columns (resp. lines). There may be one of such table per component and one for the product, or one table for all the constraints of the product and all the components. In examples at least some scores may be modified by the user(s). In other examples, the scores are fixed and non-modifiable.

The inputs also include the specifications, which may also be referred to as "preferences". The specifications indicate an extent of compatibility of one or more reference materials with the constraints. The specifications thus form data indicating how compatible is each reference material with the constraints. The specifications may comprise for example a list of the reference materials, and for each material, an overall score/classification of compatibility with the all the constraints, for example among the scores/classifications "Accepted" (which means that the material is considered compatible with the constraints) and "Rejected" (which means that the material is considered not compatible with the constraints . Each score/classification may be a string representation of one of these scores "Accepted" and "Rejected". The specifications may alternatively comprise solely a list of one or more reference materials considered as compatible with the constraints. For each reference material, or at least a part thereof, the score/classification (for example "Accepted" or "Rejected") may be associated with a component or a list of components, which means that the score is only relative to this component or list of components (*e.g*. the material is accepted or rejected for a given component only or for some given components only). This means that the preferences may concern the product, the components or at least some of them, or both. The reference materials are material within the provided set of materials, *i.e*. they belong to the provided set of materials. This means that, for at least some materials of the provided set, *i.e*. the reference materials, the determination of the optimal materials may use both the individuals scores of the materials on the constraints and the overall score/classification (*e.g.* "Accepted" or "Rejected") of compatibility of the material with respect to all the constraints.

The specifications may be provided by one or more users, *e.g*. one or more designers/engineers using the method. This allows a user, or more, to guide the method towards the determination of optimal components materials that meets or tends to meet, or at least accounts for, their expertise regarding compatibility with the constraints and regarding the manufacturing. This guides the method towards achieving an even more meaningful result, and thus makes the method in the meantime a solution to credibly assist and guide the user(s) for material selection for manufacturing: the method responds to the user specifications by providing optimal components materials that accounts for their expertise. The user(s) may also thereby react to what the method provides, and then provide different input specifications to get a different results that is more suited to their technical expertise and expectations. The method thus forms a solution for a continuous and guided user-machine interaction process for assisting the user in the material selection problem for a multi-component product to be manufactured.

The inputs have been discussed. For any input herein (*i.e*. constraint or material or specification), providing the input may be carried out by a user (or more) defining the input (*e.g*. defining a constraint, selecting a material, defining a specification, as previously discussed). Alternatively, providing the input may comprise obtaining/retrieving (*e.g*. downloading) the input, for example from a (*e.g*. distant) memory or database or server.

Further to the providing of the inputs, the method comprises determining, for each component of the product, at least one optimal material with respect to compatibility with the constraints and based on the provided specifications, for manufacturing the component. This means that the method processes the provided inputs to output, using the providing constraints, the materials found to be optimal, with respect to compatibility with/satisfaction of the constraints, for manufacturing the components. The determining of these optimal materials for the components is now discussed.

The determining of the optimal materials searches, within the provided set of components, and for each component, a material (*e.g*. one material) that is optimal, with respect for manufacturing the component. This may consist in processing the provided scores of each material on the constraints, as previously discussed, and the provided specifications (for example specifying the reference materials as compatible/ accepted or non-compatible/rejected) to extract from the provided set of material the optimal combination of materials where each material is assigned to, and optimal (with respect to the constraints) for a component, and the combination is altogether optimal with respect to the constraints. The specifications may thus guide the processing of the material scores, the specification serving as reference of which material is compatible and which are not, *i.e*. serving as a reference to learn from. Processing the scores using the specifications allows the method to understand which scores on which constraints provide for a classification as compatible/accepted and which provide for a classification as non-compatible/rejected. In other words the determination of the optimal materials aims at both satisfying the constraints and following the provided specifications.

The determining of the optimal materials may be carried out automatically further to the providing of the inputs. For example, the user(s) using the method may, further to the providing of the input, launch the automatic determining of the optimal materials, *e.g*. by clicking on or touching a displayed icon adapted for this launch. The determining of the optimal materials may in examples proceed in two steps: first, the materials are classified as accepted or rejected with respect to each component, *i.e*. a determination is made at the component level, and then only those materials classified as accepted are considered in a second, product level, determination which finds those accepted materials which are optimal for the product constraints. These two steps may be carried out sequentially (for example by learning two NCS models as discussed hereinafter) or in a same determination process (for example using a single NCS model). The determining of the optimal materials may be performed several times, for example with a partial modification of the inputs between each determining. This may lead to more than one material considered to be optimal, at least for some component(s).

The determining of the optimal materials for the components may comprise learning a Multiple Criteria Decision Aiding sorting model. The model is leaned to (*i.e.* configured to) take as input the set of materials and to output the optimal materials for the components. The learning is based on the set of materials, on the constraints, and on the specifications. The concept of Multiple Criteria Decision Aiding sorting model is known *per se*. The sorting model comprises parameters which are inferred through the learning. The learning in other words comprises inferring the parameters, this inference being the result of the optimal components materials determination. In other words, the learning infers the parameters through the optimal materials determination that is done for determining the optimal materials, where the specifications guide the learning. The model, once learnt, is configured to take as input the set of materials and to output the optimal materials for the components.

Multi-criteria decision-Aiding (MCDA) aims at developing decision-support models explicitly based on the construction of a set of criteria reflecting the relevant aspects of the decision-making problem. These $n$ criteria ($N = \{1,2 ..., n\}$ with $n \geq 2$) evaluate a set of alternatives $A = \{a, b, c, ...\}$ under consideration with respect to different viewpoints. The purpose of MCDA methodologies is to support the decision maker (DM) by providing methods and frameworks to take decisions regarding the considered decision situation. Decision problems considered in MCDA are of different types and three reference problems are encountered in practice (as discussed in reference B. Roy, "Multicriteria Methodology for Decision Aiding", Kluwer Academic, Dordrecht, 1996,which is incorporated herein by reference):

- Choice problem: It consists of selecting an alternative or a subset of alternatives. A familiar MCDA choice problem is the supplier selection problem (as discussed in reference M. Khalilzadeh, A. Karami, and Alborz Hajikhani, "The multi-objective supplier selection problem with fuzzy parameters and solving the order allocation problem with coverage", Journal of Modelling in Management, 15:705-725, 2020, which is incorporated herein by reference). Indeed, suppliers are evaluated according to several criteria such as the costs, the quality and the on-time delivery and the purpose is to choose a supplier (the best one) from a list of candidates.;
- Ranking problem: It consists in ordering a set of alternatives from the best to the worst according to the DM's preferences. The outcome of a ranking method can be either a partial or a complete ranking of the set of alternatives. An interesting example of the ranking problem is the selection of an information system evaluated according to several criteria for companies, as discussed in reference Ana Paula Henriques de Gusmão and C. Medeiros, "A model for selecting strategic information system using the fitradeoff", Mathematical Problems in Engineering, 2016:1-7, 2016, which is incorporated herein by reference;
- Sorting problem: It consists in assigning each alternative to a category selected among a set of predefined and ordered categories. The outcome of a sorting method is an assignment of the alternatives among the different categories. For example, a committee of doctors makes the decision whether a patient is accepted for surgery or not by considering several criteria that assess the patient's physical health state, as discussed in reference O. Sobrie, M. E. A. Lazouni, S. Mahmoudi, V. Mousseau, and M. Pirlot, "A new decision support model for preanesthetic evaluation", Computer Methods and Programs in Biomedicine, 133:183-193, 2016.

The specifications may form a learning set of the model, also referred to as a set of determined choices, which is data that the parameters must match, or at least tend to match, when updated. In other words, the learning may comprise inferring the parameters from the specifications so that the inferred parameters are consistent with the specifications. It may be in other words said that the learning extends the specifications, since ultimately the learned model (i.e. the model with its parameter inferred) takes as input the set of materials and outputs the components optimal (i.e. with respect to compatibility with the constraints) materials therein and that are altogether consistent with the provided specifications (i.e. the compatibility of the optimal materials with the constraints is consistent with the compatibility data provided by the specifications). In yet other words, the learning of the model takes as input a set of assignment examples (i.e. the specifications), and learns a model that is consistent with this preference data. In yet other words, the learning learns the model parameters that match (e.g. perfectly) the assignment examples.

The model may include one or more Non-compensatory Sorting models, also referred to as "NCS" model. For example, the method may learn a single NCS model that performs the determination of the optimal materials both at the component level and at the product level, as previously discussed. Alternatively, the method may learn two models, one for each level. The learning of the model may thus include learning these one or more NCS models. The NCS model(s) take as input the set of materials and outputs the optimal materials. In other words, the NCS model outputs the materials found to be optimal with respect to their compatibility with the constraints. The learning of the NCS model may comprise inferring the parameters of the NCS model based on the constraints and using the specifications, so that the NCS model parameters are such that the NCS model extends the specifications as previously discussed. For example, the learning may search for parameters of the NCS model that best match the specifications. The specifications may thus form a learning set of the NCS model. In other words, the output of the model is consistent with the specifications.

Learning a NCS model allows to consider interactions between the constraints, which may be dependent from each other, and allows to account for the alternative evaluations in an ordinal perspective, thereby avoiding compensation and enabling to deal meaningfully with the constraints. In real-world decision-aiding situations and in particular in the material selection problem, interactions between requirements/constraints may occur as there may be requirements conflicting. The concept of NCS model is known and discussed in references Bouyssou, D., Marchant, T., "An axiomatic approach to noncompensatory sorting methods in MCDM, I: the case of two categories", European Journal of Operational Research 178(1), 217-245 (2007), and Bouyssou, D., Marchant, T., "An axiomatic approach to noncompensatory sorting methods in MCDM, II: more than two categories", European Journal of Operational Research 178(1), 246-276 (2007), which are both incorporated herein by reference. NCS originates from the Electre TRI method discussed in reference Yu, W., "Aide multicritère à la decision dans le cadre de la problématique du tri: méthodes et applications", Ph.D. thesis, LAMSADE, Université Paris Dauphine, Paris (1992), which is incorporated herein by reference.

The NCS model of the present disclosure and its learning may be implemented as follows (in other words implementations of the learning of the NCS model are now discussed). As previously discussed, the method in these implementations learns to assign the materials in the categories *Accepted* and *Rejected.* NCS may be formulated according to the following: a material is assigned to the category *Accepted* if:

- It is better than the lower limit of the category on a sufficiently strong subset of criteria.

Given the input set of materials $A$, each material $a \in A$ may be evaluated according to a finite set of properties (constraints) $N$ with $n = |N|$, let $(a_1, a_2, ..., a_n)$ denote the evaluation vector of $a \in A$ with $a_j$ denoting its evaluation on property (constraint) j. The providing of the set of materials may comprise providing the set already evaluated, or providing the evaluations besides providing the set, as previously discussed. Without loss of generality, it is assumed that the preference on each property increases with the evaluation. Considering both predefined and ordered categories Rejected $\prec$ Accepted, multiple criteria sorting aims at assigning materials to one and only one category.

The assignment rule of the Non-Compensatory Sorting model operates on two types of parameters:

- Limiting profile $\langle b_j \rangle_{j \in N}$, with $(b_1, ..., b_n)$ is the boundary between the two categories Rejected and Accepted.
- Set of sufficient coalitions of properties $T$ required to be an upset of the power set of the properties.

The classification rule of the NCS model is defined as follows:

$$\forall a \in A, \quad a \in Accepted \quad \Leftrightarrow \quad \{j \in N : a_j \geq b_j\} \in T$$

The method may implement a learning paradigm in which a set of reference materials assignments (the learning set, *i.e.* the provided specifications) is provided by the product designer; the aim is to extend this learning set using an NCS model. To do so, the learning of the NCS model searched for the NCS parameters that best match the learning set. The method may, at the providing of the specifications, collect explicitly or implicitly these reference assignments. Explicitly means for example that the method comprises asking the product designer to classify a subset of materials in categories Rejected $\prec$ Accepted, and sets this set as the learning set. Implicitly means for example that the method may consider a history of examples for which previous decisions have been taken and validated by the product designer or product designers. Consequently, the method sets this history as the learning set. In some situations, the learning set may be inconsistent (i.e. the product designer preferences cannot be restored by some multicriteria sorting model). To cope with this, a preliminary phase (interactive procedure for building consensus) may be applied to revise the learning set, as discussed hereinafter. As previously discussed, the method focuses on the evaluation of materials on latent, single peaked and single valley properties. Thus, when learning the NCS model that evaluates the set of materials, the method handles these types of properties.

In implementations, determining/selecting the optimal components materials within the provided set of materials may be based on a selection strategy process that takes into account four aspects:

(i) The selected mix of materials must have best qualifications according to the product-oriented properties/constraints,
(ii) The materials that constitute the final solution must be evaluated as "Accepted" according to the set of component-oriented constraints,
(iii) The materials that constitute the final solution must respect the component-oriented manufacturing constraints, and
(iv) The product-oriented constraints must be respected.

As discussed previously, materials evaluation and, more precisely, the distinction between "Accepted" and "Rejected" materials may be performed by classifying them into two ordered categories *Accepted* and *Rejected* using an NCS model. The NCS model parameters may be learned according to the product designers' preferences (learning set) by mobilizing an efficient SAT/MaxSAT-based learning formulation, which is discussed hereinafter, and the learning may evaluate the quality of the models with respect to the compatibility with the learning set.

Since the materials that constitute the product must be evaluated as "Accepted" according to component-oriented properties, they must be selected from the category *Accepted* after classifying all items by the learned NCS model. In some situations, the learning phase could end up with several compatible NCS models. To obtain the best mix of materials, choosing the best model issued from the learning step may not always be guaranteed. To avoid a complete enumeration of all compatible NCS models, the method formalizes the task of identifying the best mix of materials as an integrated task within the learning problem, i.e. learning a constrained NCS model.

For that, the method integrates in implementations the product-oriented properties and constraints into the sorting model learning formulation. In other terms, the generation of the final solution is coupled with the learning of the compatible NCS model, which ensures that all the materials that constitute the selected solution are considered as "accepted" by the same compatible sorting model. If the method cannot output a compatible model, the method may comprise performing a preliminary phase of reviewing the learning set as discussed hereinafter. At the end, the learning formulation returns a compatible sorting model used to classify the materials into *Accepted* and *Rejected* categories, and therefore the preferred solution is represented by *Accepted* category. A formal representation of these implementations is now detailed.

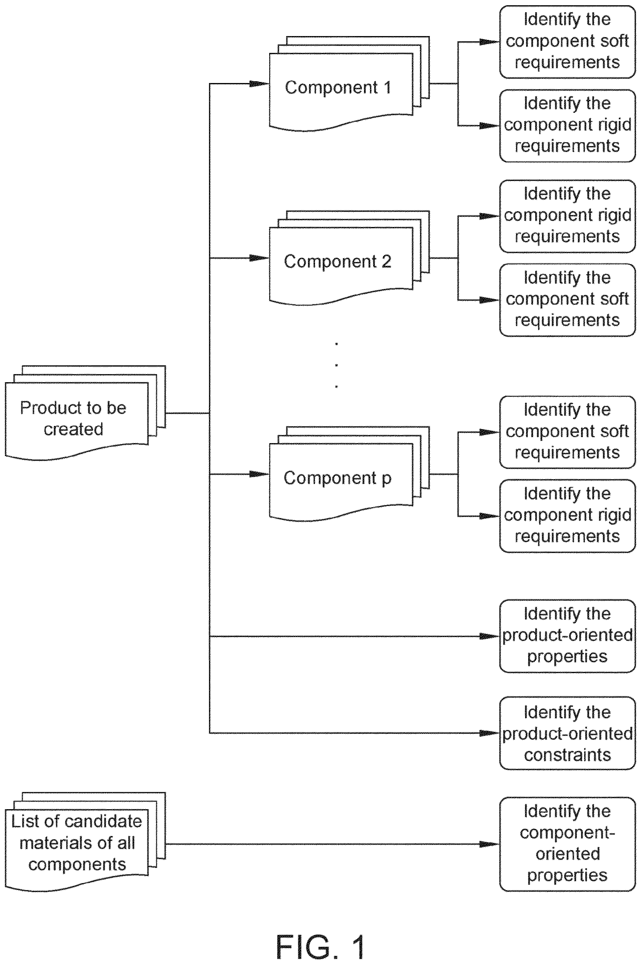

FIG. 1 depicts the problem input and requirements in implementations. It is considered a manufacturing product (*i.e.* a product to be manufactured) constituted by $p$ components. Each component is associated to a set of soft and rigid component-oriented requirements ("requirement" being herein synonymous to "constraint"). At the product level, the manufacturing product is associated to a set of rigid and soft product-oriented requirements. Component-oriented requirements are used to evaluate the intrinsic evaluation of each candidate material while product-oriented requirements are involved to express the compatibility matrix between materials and the product constraints (e.g. budget constraint, interdependencies between materials, logic constraints) that may occur. Beyond that, materials are also evaluated according to a set of properties, the material constraints, *e.g.* which may have been deemed relevant by the product designers.

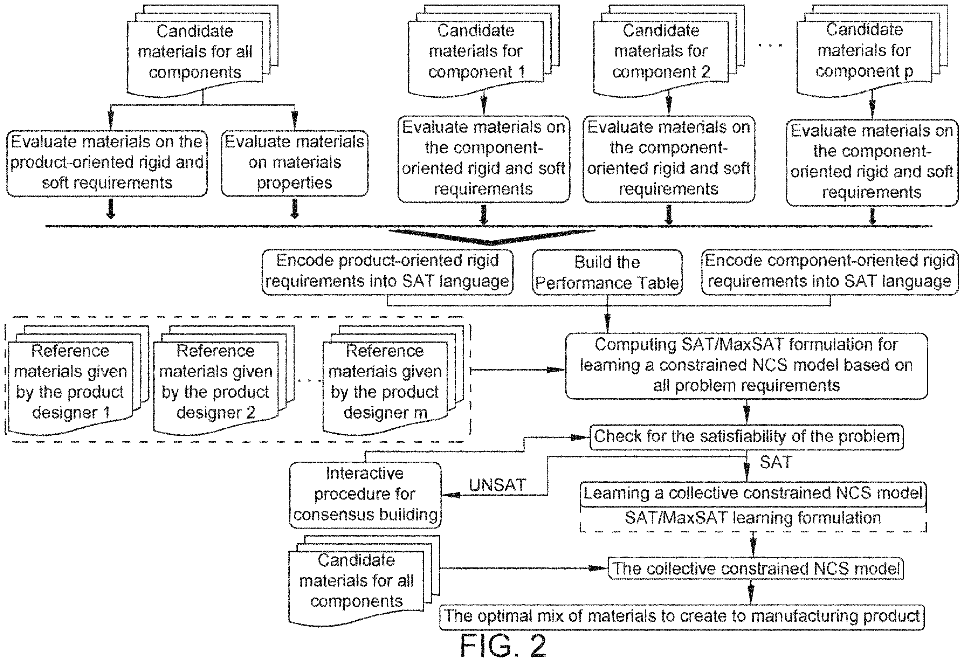

FIG. 2 illustrates the proposed strategy for the selection of multi-component materials. At first, the method provides the data concerning the material evaluations according to input data shown in FIG. 1. After having evaluated the materials on all the problem dimensions, the method then proceeds by building the performance table. The performance table contains the material evaluations according to the product-oriented and component-oriented soft requirements as well as the materials properties. Along with building the performance table, rigid requirements whatever product-oriented or component-oriented are encoded into SAT language. Once the performance table is built and the rigid requirements are expressed into SAT language (as discussed hereinbelow), the method implements the learning formulation that uses the input data of the problem and fed by reference materials given by all product designers. The learning formulation serves to learn a collective NCS classification model compatible with reference materials (preference information) and distinguishes between *Accepted* materials and *Rejected* ones.

Implementations of the learning of the NCS model have been discussed. Going back to the method (*i.e.* not necessarily implementations thereof as just discussed), the learning may comprise encoding learning clauses based on the constraints. The encoding uses a SAT-based encoding (or MaxSAT as discussed hereinafter) . SAT-based encoding is known *per se*. Implementations of the SAT encoding are discussed hereinbelow.

A SAT instance is a Boolean formula that has three components; a set of variables ($x_1$, $x_2$, ..., $x_n$), a set of literals, each literal is a variable $x$ or its negation $\neg x$, and a set of distinct clauses ($C_1$, $C_2$, ..., $C_m$). Each clause consists of only literals combined with logical "or" (V) connectives. The goal of the satisfiability problem is to determine whether there exists an assignment of truth values to variables ($x_1$, $x_2$, ..., $x_n$), that makes the following Conjunctive Normal Form (CNF) formula satisfiable: $C_1 \wedge C_2 \wedge ... \wedge C_m$, where $\wedge$ is a logical "and". In some situations, satisfying all the constraints is not possible. Thus it is aimed at finding an assignment to satisfy the most of the constraints (clauses), i.e. resolving the Maximum Satisfiability (MaxSAT) problem. Particularly, people are often interested in solving Partial MaxSAT, where the constraints are divided into hard and soft constraints. The goal is to satisfy all hard constraints and maximize the number (or the total weight) of satisfied soft constraints. To distinguish between hard and soft clauses, let $w_{max}$ denote the weight associated with each hard clause and therefore, it is considered clauses associated with a weight less than $w_{max}$ as soft clauses. Many real world problems can be modeled as MaxSAT problems naturally.

The specifications may comprise incompatible specifications. In this case the learning includes finding a compromise between the incompatible specifications. The incompatible specifications may be provided by different users. This may comprise iteratively modifying the learning set until reaching an extent of compatibility between the specifications. This may be performed using an interactive procedure comprising iterations of (until a consensus is reached): asking the users for their preferences (e.g. reference materials assignments to "accepted" or "rejected"), implementing a voting rule to remove incompatible preferences, and ask the users for their agreement on the result of the voting rule. The interactive procedure may be that which is discussed hereinbelow. Still in this case, the learning may comprise (instead of or in addition to the interactive procedure) encoding learning clauses based on the constraints and the encoding may use a MaxSAT-based encoding.

Thus, to handle incompatible specifications, MaxSAT-based encoding and/or said interactive procedure may be performed. In implementations thereof, which may be combined with the above-discussed implementations (N.B. all implementations discussed in the present disclosure are combinable), the learning formulation is expressed in SAT/Max-SAT language, and to study the compatibility of the preferences of product designers with the problem requirements, the method may first perform any suitable satisfiability test (*i.e.* to check whether the provided specifications are compatible, or to which extent (*e.g.* percentage) they are). If the result is satisfying (SAT) and therefore a collective NCS model can be deduced, this model is learnt to select for each component the appropriate material. In the case where the result is not satisfying (UNSAT), the interactive procedure is performed to revise the specifications in order to learn collaboratively a collective NCS model.

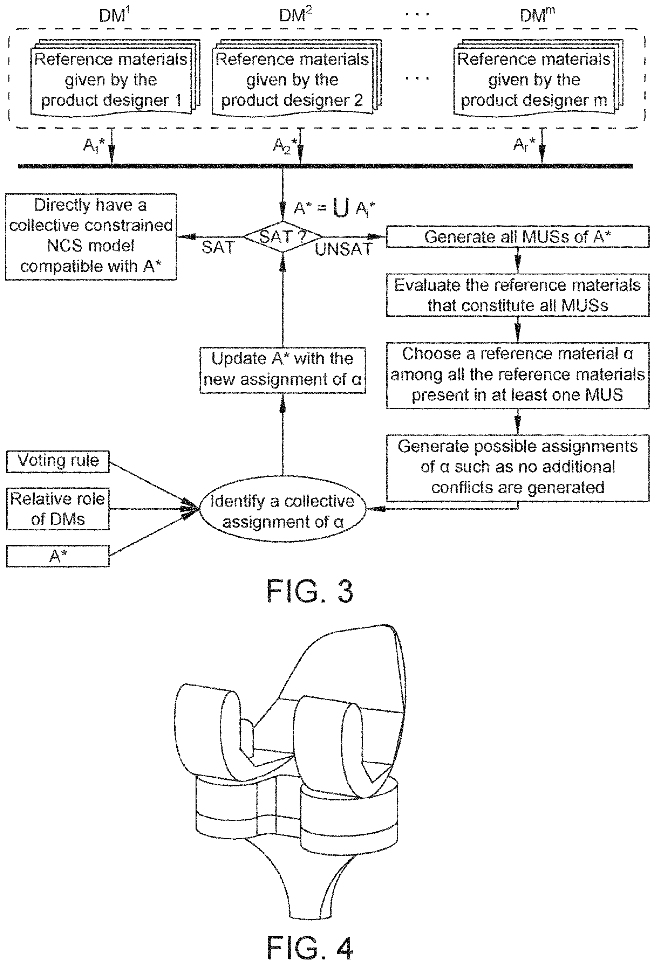

Implementations of the interactive procedure, which are combinable with all the above-discussed implementations, are now discussed. When multiple product designers are involved in the decision process, a set of reference materials assignments (specifications) $A_i^*$ is provided by each one and the objective is to learn a collective constrained NCS model aligned with all the product designers points of view. Putting all the learning sets together in an aggregated learning set $A^*$ may add inconsistency and therefore it may be that no NCS model can be elicited. In this case, the method may perform the interactive procedure to revise the learning set $A^*$ by proposing at each iteration to the product designers to agree on the assignment of a reference material among those which generate the inconsistency. The procedure seeks to reach a consensus between decision makers and derive a collective NCS model. The procedure may be as follows (as illustrated on FIG. 3):

***Step 1*:** Each product designer provides a learning set. The product designers may have given their opinion on the same material or on different ones. In the first case, the procedure constructs the collective learning set by assigning each material to the winning category according to the chosen voting rule. In the second case, the collective learning set is simply the union of the individual ones. The iterative procedure takes as input the collective learning set constructed as before.

***Step 2:*** The procedure checks whether there is a model that restores all the reference materials of the collective learning set. If this is the case, the procedure directly deduces a compatible NCS model. Otherwise, the procedure goes to the next step.

***Step 3:*** The procedure generates all minimal UNSAT sets (MUS): A MUS is a set of unrestored reference materials of minimal cardinality.

***Step* 4:** The procedure evaluates all the reference materials present in at least one MUS with an appropriate indicator in order to determine the reference material which collective assignment will be modified at this iteration.

***Step* 5:** The procedure generates the set of categories possibly assigned to the reference material chosen in Step 4 so as not to generate any additional conflict.

***Step 6:*** By taking into account all the possible categories, a chosen voting rule, the relative role of the product designers as well as the preferred assignments of the product designers for this reference material, the new assignment is determined and the procedure updates the collective learning set.

***Step* 7:** The procedure checks if the new learning set is satisfiable. If this is the case, the procedure deduces the collective NCS model. If this is not the case, the procedure goes back to Step 2.

Implementations of the SAT/MaxSAT learning formulation which is used to learn a constrained NCS model from the component-oriented and product-oriented requirements and from the specifications are now discussed.

Notations:

- i E {1, ..., m}: the $i^{th}$ component of the product
- $MC_i$ materials candidates for the component i
- m the number of product designers
- $l \in \{1, ..., m\}$: the $l^{th}$ product designer
- $n_{CSR}$ the number of component-oriented soft requirements
- $n_{PSR}$ the number of product-oriented soft requirements
- $n_{MP}$ the number of materials properties
- $$N_s = \{1, \dots, n_{CSR}, n_{CRR} + 1, \dots, n_{CSR} + n_{PSR}, n_{CSR} + n_{PSR} + 1, \dots, n_{CSR} + n_{PSR} + n_{MP}\}$$
- $n_{CRR}$ the number of component-oriented rigid requirements
- jCRR $\in \{1, \dots, n_{CRR}\}$ the $j^{th}$ component-oriented rigid requirement

- Ai learning set provided by the $i^{th}$ product designer
- A* Collective learning set provided by all the product designers to learn a collective NCS model.
- A the set of candidate materials
- *Rejected*$^i$ the set of materials rejected for component i
- *Accepted*$^i$ the set of materials accepted for component i

**Variables:** Learning the collective NCS model involves 3 family of variables:

- *"a"* variables, indexed by an attribute $j \in N$, a component i and a material $k \in A$, represent the approved sets with the following semantic: $a_{j,k}^{i} = 1 \Leftrightarrow k_j \geq b_j^i$ *i.e. k* is approved according to i for the component i;
- *"t"* variables, indexed by a collation of criteria $B \subseteq N_s$ represent the sufficient coalitions *T,* with the following semantic: $t_B = 1 \Leftrightarrow B \in T$ *i.e.* the coalition *B* is sufficient;
- "*z*" variables, indexed by a component i and an reference material $k \in A^*$, represent the set of reference materials property classified by the inferred model;
- "*x*" variables, indexed by a component i and a candidate material $k \in A$, represent the accepted material for each component.

**Clauses:**

1. SAT clauses based on the component-oriented rigid requirements:

   Let $k_{jCRR} = 1$ if the material $k \in MC_i$ is compatible with the component rigid requirement $j_{CRR}$ and 0 otherwise. According to this definition, SAT clauses based on the component rigid requirements are as follows:

$$\varphi_1^{CRR} = \bigwedge_{i \in \{1,\ldots,m\}} \bigwedge_{j_{CRR} \in \{1,\ldots,n_{CRR}\}} \bigwedge_{k \in MC_i : k_{j_{CRR}}=1} x_k^i$$

$$\varphi_2^{CRR} = \bigwedge_{i \in \{1,\ldots,m\}} \bigwedge_{j_{CRR} \in \{1,\ldots,n_{CRR}\}} \bigwedge_{k \in MC_i : k_{j_{CRR}}=0} \neg x_k^i$$

   Clauses $\varphi_1^{CRR}$ and $\varphi_2^{CRR}$ are hard, associated to the weight $w_{max}$.

2. SAT/MaxSAT formulation for learning a collective NCS model $\varphi^{NCS}$:

   $\varphi_1^{NCS}$ : ensure monotony condition

   $\varphi_2^{NCS}$ : ensure that the set of sufficient coalitions *T* is an upset

   $\varphi_3^{NCS}, \varphi_4^{NCS}$ : ensure the restoration of the learning set

   $\varphi_5^{NCS}$ : ensure the maximization of the respected number of reference material assignments

$$\varphi^{NCS} = \bigwedge_{l \in \{1,5\}} \varphi_l^{NCS}$$

$$(\varphi_1^{NCS}, w_{max}) = \bigwedge_{i\in\{1,\dots,m\}} \bigwedge_{j\in N_S} \bigwedge_{k' \geq_j k \in A} \left(a_{j,k'}^i \vee \neg a_{j,k}^i \vee \neg x_k^i \vee \neg x_{k'}^i\right)$$

$$(\varphi_2^{NCS}, w_{max}) = \bigwedge_{B \subset B' \subseteq N_S} (t_{B'} \vee \neg t_B)$$

$$(\varphi_3^{NCS}, w_{max}) = \bigwedge_{i\in\{1,\dots,m\}} \bigwedge_{B\subseteq N_P} \bigwedge_{k\in A^*:\, k \in Rejected^i} \left(\bigvee_{j\in B} \neg a_{j,k}^i \vee \neg t_B \vee \neg z_k^i \vee \neg x_k^i\right)$$

$$(\varphi_4^{NCS}, w_{max}) = \bigwedge_{i\in\{1,\dots,m\}} \bigwedge_{B\subseteq N_P} \bigwedge_{k\in A^*:\, k \in Accepted^i} \left(\bigvee_{j\in B} a_{j,k}^i \vee t_{N\backslash B} \vee \neg z_k^i \vee \neg x_k^i\right)$$

$$(\varphi_5^{NCS}, w_1) = \bigwedge_{i\in\{1,\dots,m\}} \bigwedge_{k\in A^*} (z_k^i)$$

$\varphi_{l\in\{1,\dots,4\}}^{NCS}$ are hard, associated to the weight $w_{max}$, and associated to $\varphi_5^{NCS}$ is the weight $w_1$ such as $w_{max} \geq |A^*|$.

3. SAT encoding of product-oriented rigid constraints

The implementations consider two types of product-oriented rigid requirements that are assumed to be generic. The first is the budget constraint, which encompasses cardinality constraints and pseudo-Boolean constraints and represented by a tuple < $g_c$, $\phi(g_c)$,$\underline{\sigma}$, $\overline{\sigma}$>, $g_c$ is the criterion on which items are evaluated and which is used to define the considered budget constraint, $\phi$ a function from $P(A)$ to $\mathbb{R}$ , representing the computation rule defined by the product designers to aggregate the individual values of items on the criterion $g_c$, and $\underline{\sigma}$ (respectively $\overline{\sigma}$) is the lower bound (respectively the upper bound ) of the considered constraint. The constraint < $g_c$, $\phi(g_c)$, $\underline{\sigma}$, $\overline{\sigma}$> is thus expressed in the following terms: $\underline{\sigma} \leq$ *1>(Bc)* $\leq \overline{\sigma}$.

$\phi(g_c)$ is the scalarization function defined by the product designers to evaluate the portfolio (*i.e.* the set of materials for all the components) as a whole. It is assumed here that this function is a linear combination of binary variables $x_k$, $\forall k \in A$, i.e. the associated portfolio constraint is expressed as follows; $\underline{\sigma} \leq \Sigma_{k\in A}\, w_k x_k \leq \overline{\sigma}$. To express this inequality in satisfiability problem, it is considered the two pseudo-Boolean constraint $\underline{\sigma} \leq \Sigma_{k\in A}\, w_k x_k$ and $\Sigma_{k\in A}\, w_k x_k \leq \overline{\sigma}$. The first constraint is treated by the sequential weight counter encoding as discussed herein, and the method converts the second constraint into standard form:

$$\underline{\sigma} \leq \sum_{k\in A} w_k x_k \;\Leftrightarrow\; \sum_{k\in A} w_k \neg x_k \leq \sum_{k\in A} w_k - \underline{\sigma}$$

SAT encoding of both types of constraints results in a set of clauses in the conjunctive normal form, which operates on additional binary variables.

Given a set of items $A$ such that $n = |A|$, a vector of weights < $w_i$ >$_{i\in\{1,\dots,n\}}$ and an upper bound $\sigma \in \mathbb{N}$ , the

boolean function $\phi^{LC}$ is defined with variables $< x_i >_{i \in \{1,\ldots,n\}}$ and $< R_{i,k} >_{i \in \{1,\ldots,n-1\}, k \in \{1,\ldots,\sigma\}}$, as the conjunction of clauses:

$$\phi^{LC} = \phi_1^{LC} \wedge \phi_2^{LC} \wedge \phi_3^{LC} \wedge \phi_4^{LC}$$

$$\phi_1^{LC} = \bigwedge_{i=2}^{N-1} \bigwedge_{k=1}^{\sigma} (\neg R_{i-1,k} \vee R_{i,k})$$

$$\phi_2^{LC} = \bigwedge_{i=2}^{N-1} \bigwedge_{k=1}^{w_i} (\neg x_i \vee R_{i,k})$$

$$\phi_3^{LC} = \bigwedge_{i=2}^{N-1} \bigwedge_{k=1}^{\sigma - w_i} (\neg R_{i-1,k} \vee \neg x_i \vee R_{i,k+w_i})$$

$$\phi_4^{LC} = \bigwedge_{i=2}^{N-1} (\neg R_{i-1,\sigma+1-w_i} \vee \neg x_i$$

All clauses of the formulation $\phi^{LC}$, associated to the weight $w_{max}$.

The second product-oriented rigid requirement considered in this disclosure is the material compatibility matrix. Indeed, during manufacturing of a multi-component product, the materials that make up the components must be compatible with each other. To do this, given for each component $i$ a set of materials candidates $MC_i$, the compatibility matrix CM = $(cm_{1 \leq a \leq \Sigma_i |MC_i|, 1 \leq b \leq \Sigma_i |MC_i|})$ is used and defined as follows:

$$cm_{a,b} \begin{cases} 1, & \textit{if materials a and b are compatible} \text{ with each other} \\ 0, & \textit{otherwise} \end{cases}$$

The compatibility matrix is implied in the learning formulation via the following clauses:

$$\phi^{CM} = \bigwedge_{a \in \{1,\ldots,\sum_i |MC_i|\}, b \in \{1,\ldots,\sum_i |MC_i|\}:\, cm_{a,b}=0} \neg x_a \vee \neg x_b$$

Clauses $\phi^{CM}$ are hard, associated to the weight $w_{max}$.

An example of application of the above-discussed implementations of the method for material selection of a multi-components knee prothesis is now discussed, with reference to FIG. s 4 to 13.

FIG. 4 shows a 3D model of the prothesis. The total knee prosthesis may consist of three major parts: the femoral component, the tibial component with the tibial tray and insert, and the patellar component, also known as the kneecap. The femoral component replaces the lower part of the thighbone, while the tibial tray is inserted into the upper part of the shinbone. The tibial insert lies between the femoral and tibial components, and the patellar component substitutes the back of the kneecap. The aim of this example is to apply the proposed method in order to select a set of materials for the three components of the knee prosthesis while satisfying both soft and hard component-oriented and product-oriented requirements and considering the preferences of the product designers.

The application of the method to this knee prothesis example follows the followings steps, with the ultimate purpose of manufacturing the prothesis.

**Step a)** - **criteria/constraints selection**

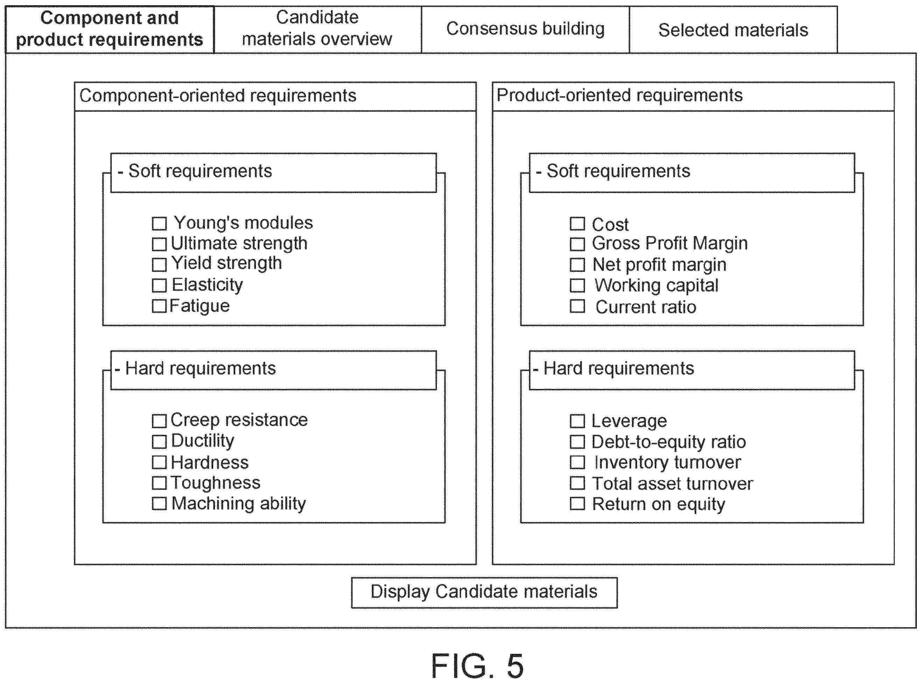

The user(s) (designer(s)) starts by providing the constraints/requirements, by choosing the component-oriented and the product-oriented rigid and soft requirements/constraints. This may be done by the user(s) interacting with the user-interface illustrated on FIG. 5, where lists of soft and rigid requirements/constraints are displayed to the user, both for the product and for the components. The lists are displayed on a "component and product requirements tab", which may be selected by the user upon graphical user interaction (*e.g.* click or touch). Each requirement is displayed as a string of characters with a checkbox near it. The user(s) may provide the constraints/requirements of their choice by selecting the appropriate checkboxes. Alternative suitable graphical selection means may be contemplated.

**Step b)** - **performance Table**

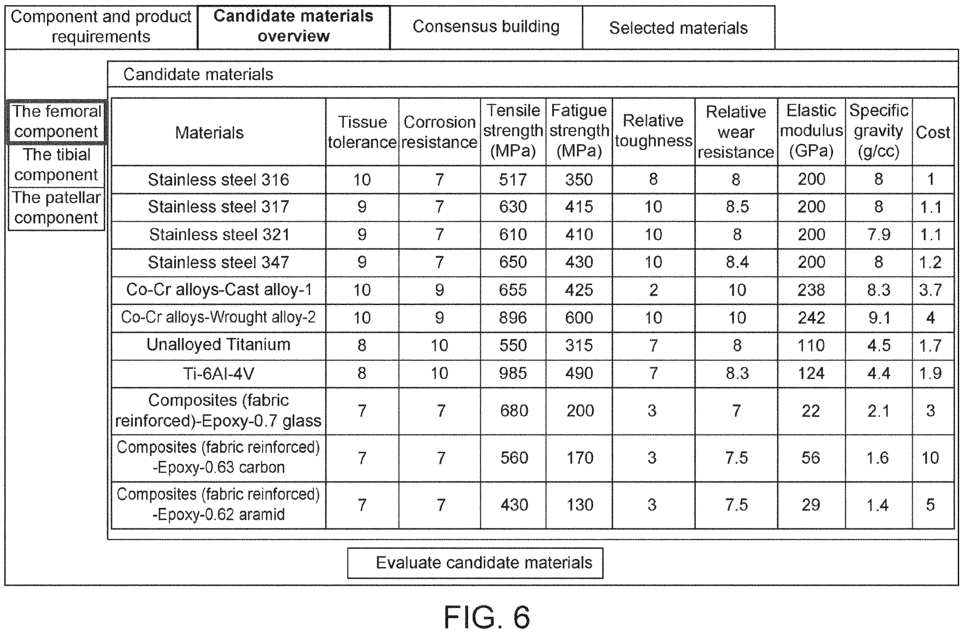

Next, the method comprises providing the set of materials by displaying, for each component, the set of materials with for each material its evaluation/score on each constraints associated for the component. This may be done as illustrated on FIG. 6, which illustrates the same interface shown on FIG. 5, but where the user(s) did select a "candidate materials overview" and the "femoral component" tab, to display the scores of the materials on the requirements for the femoral component. As previously discussed, the user(s) may provide at least some of the evaluations/scores, for example by graphical user interaction with the interface illustrated on FIG. 6.

**Step c) - construction of an evaluation model on the candidate materials**

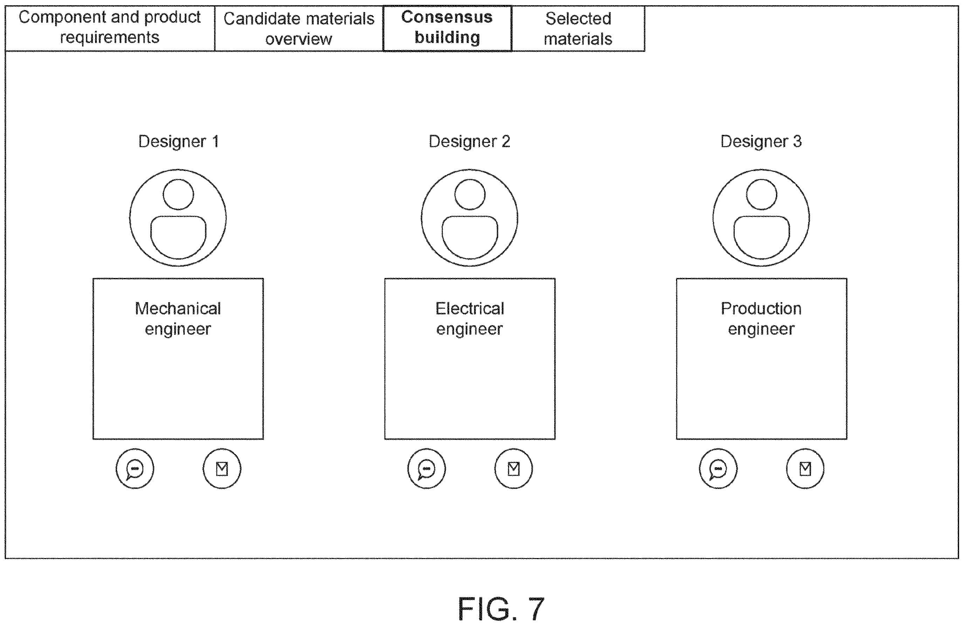

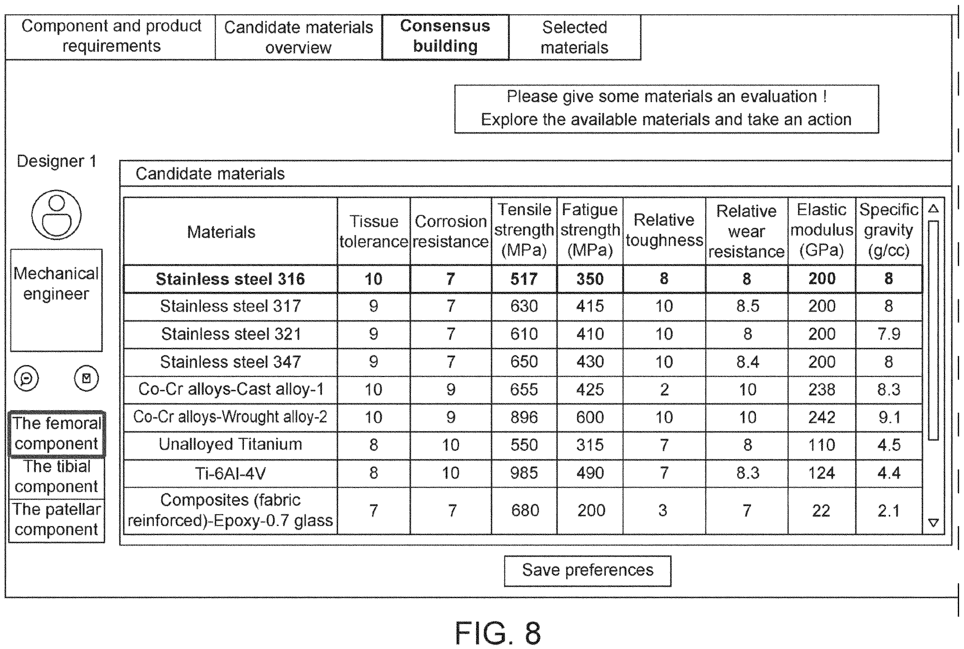

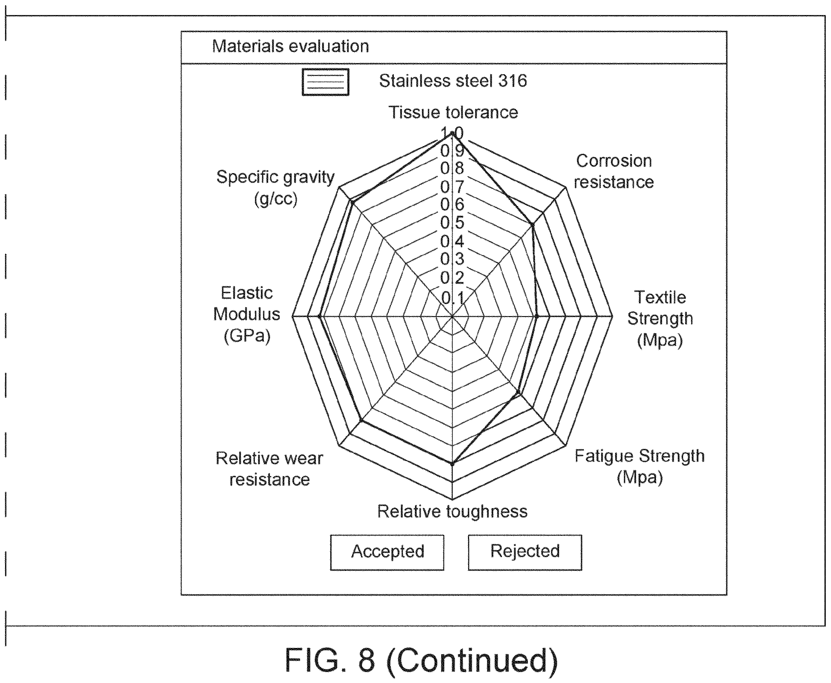

At this step, the method aims at building an evaluation model based on the component-oriented and the product-oriented requirements. The construction of this evaluation model involves in the discussed example three designers and the objective is to learn the model from their preferences (provided specifications). The profiles of the three designers may be displayed on the interface, by selecting (*e.g.* by graphical user interaction) the "consensus building" tab, as illustrated on FIG. 7. The providing of the specifications comprises the method interactively inviting each designer to input its preferences/specifications on some materials of the provided set (the reference materials), for example by graphical user interaction. This may be done upon the user selecting its profile as illustrated on FIG. 7, which triggers the display of the interface as illustrated on FIG. 8 for Designer 1. As illustrated on FIG. 8, the materials may be selected from the left-hand side "candidate materials" table. Upon a material being selected, it is displayed on the right-hand side (shown in FIG. 8 (continued)) a graphical representation of the evaluations of the material on the requirements, with below an "accepted" icon, which the users can select (by click or touch for example) for specifying that they consider the material compatible with the constraints, and a "rejected" icon, which the users can select (by click or touch for example) for specifying that they consider the material not compatible with the constraints. A "save preference button" allows the designer to validate and save their provided specifications.

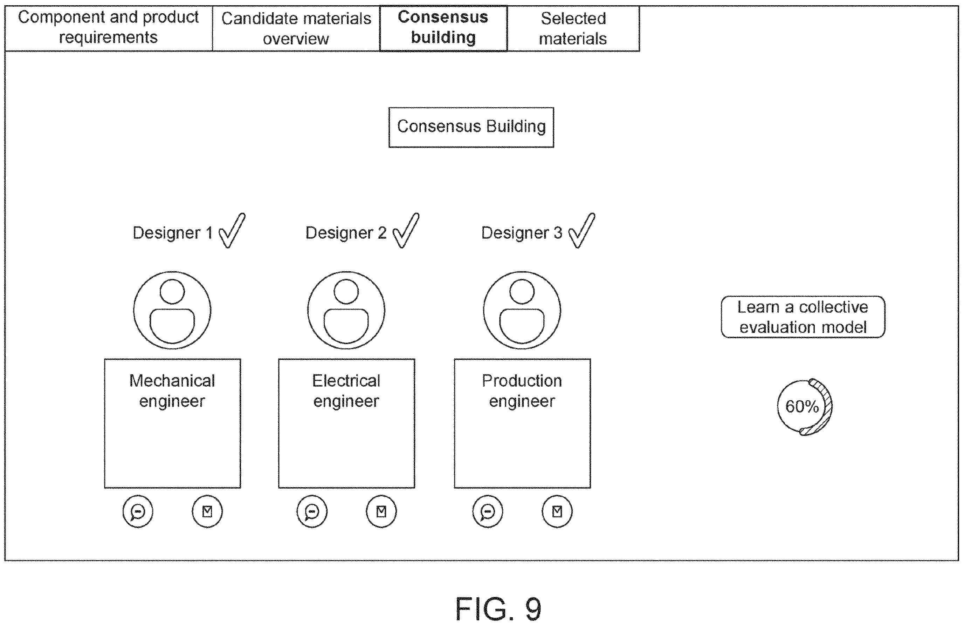

After the preference elicitation phase, a collective model is constructed from the preferences provided by the three designers. At this stage, a compatibility test is performed. In the case where the preferences of the three designers are consistent, a learning formulation, which involves the product-oriented requirements, is used to generate a compatible evaluation model. Otherwise, the method proceeds interactively with the three designers to revise their preferences in order to build a consensus. FIG. 9 shows that the specifications provided by the designers have a compatibility of 60%, and shows a "consensus building" button that may be selected (*e.g.* by graphical user interaction) to go to the interactive consensus building procedure.

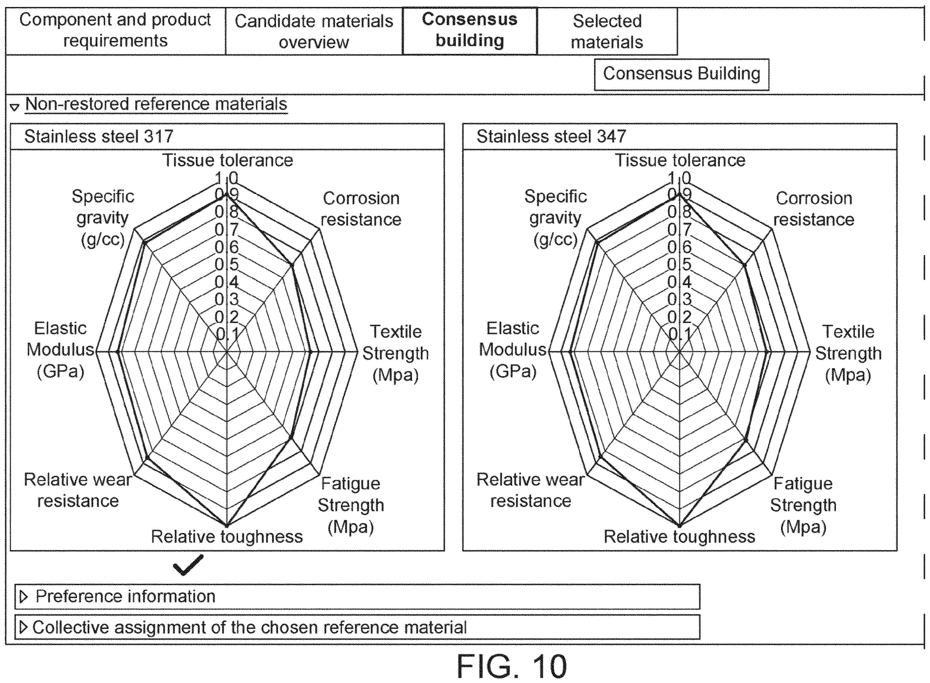

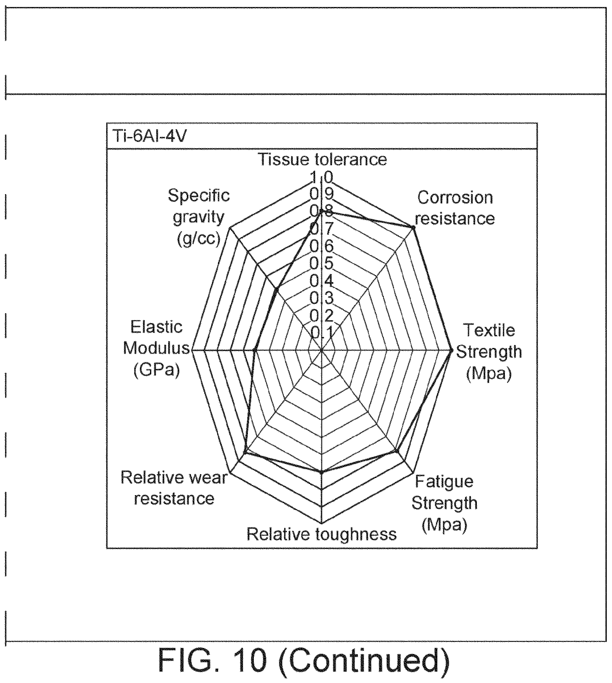

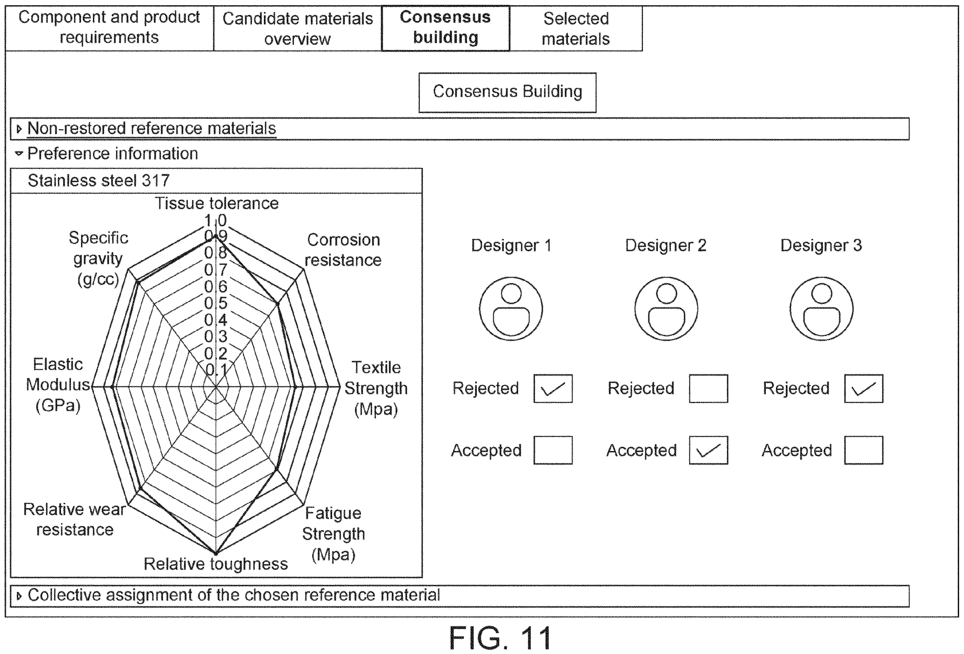

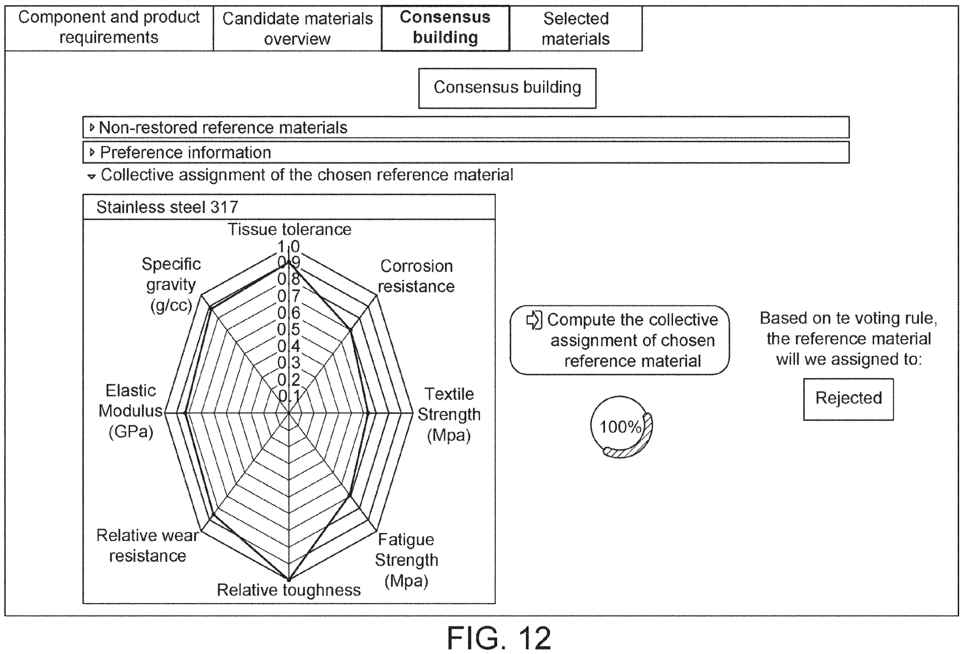

The interactive procedure used to revise the designers' preferences starts by generating reference materials that represent the inconsistency source. Once these materials are generated, in each iteration, the procedure randomly takes a material and generates the associated compatible evaluations, which removes the associated inconsistency. This is illustrated on FIG. 10. Then, the designers are asked to associate the desired evaluation with this material among possible ones: this is illustrated on FIG. 11. Finally, based on a voting rule, the procedure deduces the collective evaluation of the material from the preferences of the three designers, as illustrated on FIG. 12 (where the designers can select a checkbox to vote.

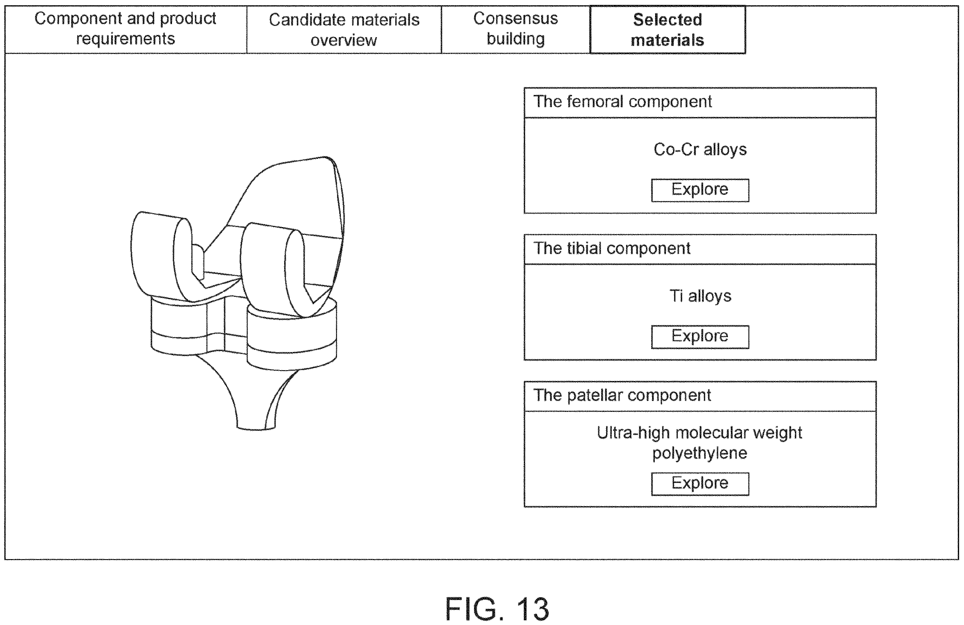

The interactive procedure for preference revision process is repeated until the preferences of the designers become consistent. In this case, a collective evaluation model can be learned from these preferences and this model is used to select for each component of the knee prosthesis the most suitable material. In the last stage, the selected materials are displayed, as illustrated on FIG. 13.

As illustrated by the above example, the implementations of the method provide the following advantages, which are now discussed.

Given a manufacturing product consisting of a set of components, several materials can be used to design each component. In the implementations, a two-level selection strategy is proposed; a component level and a product level. In the component level, it is searched for intrinsically evaluating the candidate materials for each component based on a set of component-oriented rigid requirements (*e.g.* geometry, external forces, properties of stock material before processing,), component-oriented soft requirements (*e.g.* mechanical properties, physical properties, economic criteria,), a set of materials properties (constraints), and the preferences of the product designers. The idea is to ensure the feasibility of the decision as well as the gain of the product designers' confidence. Moreover, in the product level, the implementations choose the mix of materials for all the components of the manufacturing product, while optimizing a set of soft and rigid criteria called product-oriented criteria and respecting the product designers' preferences.

In the implementations, a two-level selection strategy is thus proposed to handle the materials selection problem for a multi-component manufacturing product. The selection process is formulated as a multicriteria constrained sorting problem i.e. the objective is to select the mix of materials compatible with each other, which respect component-oriented requirements and product-oriented requirements. It is ensured that the selected materials have the best performance at the component level and at the product level. It is proposed to use a constrained NCS model to assign the materials into two ordered categories Accepted/Rejected and with the consideration of all the dimensions of the problem defined above, the materials will be used to design the manufacturing product will be given by the category Accepted. The used NCS model is learned interactively according to the preferences of a group of product designers. Therefore, it is developed an innovative elicitation procedure for several product designers (a decision committee) allowing each member of the committee to provide individual preference information in order to build a collective preference model accepted by each product designer. This work contributes to bring together recent advances in both multicriteria decision analysis and social choice domains and provide multicriteria multifactor decision support solutions, thereby the hybridization of these disciplines.

The implementations enables the combination of both evaluation systems i.e. component-oriented evaluation and product-oriented evaluation with the fact considering them in the same devise. This allows to select the mix of the best materials intrinsically and as a whole, and respecting all the constraints of the problem. Moreover, considering the product designers preferences when constructing the two evaluation models ensures the feasibility of the decision as well as the gain of the product designers' confidence and avoids the black box problem. Decisions made in this type of applications (material selection) are not generally the responsibility of a unique decision maker but a group of decision makers. The implementations account for that by providing decision support tools that involve a committee of product designers. As regards material qualifications, the implementations provide a solution that handles different types of evaluations such as latent monotone evaluations, single peaked and single valley evaluations. The consideration of these types of criteria in these implementations is coupled with the elicitation of its patterns e.g., it is learned an evaluation system for materials and the parameters of these criteria simultaneously, which may be useful for a future use of the solution. In the implementations, it is adopted the sorting method NCS to evaluate materials according to component-oriented and product-oriented properties. With NCS model, interactions between evaluation properties are considered and one of its specificities is to account for the alternative evaluations in an ordinal perspective avoiding compensation and enabling to deal meaningfully with qualitative data. Finally, the provided SAT/MaxSAT based solution through the implementations is investigated to be computationally efficient and eventually be able to solve problems with large datasets.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

The product to be manufactured contemplated in the method may a (e.g. mechanical) part or assembly of parts (or equivalently an assembly of parts, as the assembly of parts may be seen as a part itself from the point of view of the method), or more generally any rigid body assembly (e.g. a mobile mechanism). The product may be a product from various and unlimited industrial fields, including: aerospace, architecture, construction, consumer goods, high-tech devices, industrial equipment, transportation, marine, and/or offshore oil/gas production or transportation. The product may thus be an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

FIG. 14 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

**1.** A computer-implemented method for selecting materials of components of a product to be manufactured, the method comprising:

- providing:
  - ◦ a set of materials for the components of the product;
  - ◦ for each component:
    - ▪ a set of use and/or manufacturing and/or material constraints for the component;
  - ◦ for the product:
    - ▪ a set of use and/or manufacturing constraints for the product; and
    - ▪ one or more material compatibility constraints; and
  - ◦ specifications indicating an extent of compatibility of one or more reference materials within the set of materials with the constraints; and

- determining, for each component of the product, at least one optimal material, with respect to compatibility with the constraints and based on the provided specifications, for manufacturing the component.

**2.** The method of claim 1, wherein the determining of the optimal materials for the components comprises learning a Multiple Criteria Decision Aiding sorting model configured to take as input the set of materials and to output the optimal materials for the components, the learning being based on the set of materials, on the constraints, and on the specifications.

**3.** The method of claim 2, wherein the specifications form a learning set of the model.

**4.** The method of claim 2 or 3, wherein the model includes one or more Non-Compensatory Sorting (NCS) models.

**5.** The method of claim 4, wherein the learning comprises encoding learning clauses based on the constraints, the encoding using a SAT-based encoding.

**6.** The method of any one of claims 2 to 5, wherein the specifications comprise incompatible specifications, and the learning includes finding a compromise between the incompatible specifications.

**7.** The method of claim 6, wherein the learning comprises encoding learning clauses based on the constraints, the encoding using a MaxSAT-based encoding.

**8.** The method of claim 6 or 7, wherein finding a compromise comprises iteratively modifying the learning set until reaching an extent of compatibility between the specifications.

**9.** The method of any one of claims 6 to 8, wherein the incompatible specifications are provided by different users.

**10.** The method of any one of claims 1 to 9, wherein the specifications are provided by one or more users.

**11.** The method of any one of claims 1 to 10, wherein one or more constraints are latent constraints.

**12.** The method of any one of claims 1 to 11, wherein the method further comprises using the determined optimal materials for manufacturing the components.

**13.** A computer program comprising instructions which, when executed on a computer system, causes the computer system to carry out the method of any one of claims 1 to 12.

**14.** A computer-readable data storage medium having recorded thereon the computer program of claim 13.

**15.** A computer system comprising a processor coupled to a memory, the memory having recorded thereon the computer program of claim 13.

Product to be created
Component 1
Component 2
Component p
Identify the component soft requirements
Identify the component rigid requirements
Identify the component rigid requirements
Identify the component soft requirements
Identify the component soft requirements
Identify the component rigid requirements
Identify the product-oriented properties
Identify the product-oriented constraints
List of candidate materials of all components
Identify the component-oriented properties

FIG. 1

Candidate materials for all components
Candidate materials for component 1
Candidate materials for component 2
. . .
Candidate materials for component p
Evaluate materials on the product-oriented rigid and soft requirements
Evaluate materials on materials properties
Evaluate materials on the component-oriented rigid and soft requirements
Evaluate materials on the component-oriented rigid and soft requirements
Evaluate materials on the component-oriented rigid and soft requirements
Encode product-oriented rigid requirements into SAT language
Build the Performance Table
Encode component-oriented rigid requirements into SAT language
Reference materials given by the product designer 1
Reference materials given by the product designer 2
. . .
Reference materials given by the product designer m
Computing SAT/MaxSAT formulation for learning a constrained NCS model based on all problem requirements
Check for the satisfiability of the problem
SAT
UNSAT
Interactive procedure for consensus building
Learning a collective constrained NCS model
SAT/MaxSAT learning formulation
Candidate materials for all components
The collective constrained NCS model
The optimal mix of materials to create to manufacturing product

FIG. 2

DM1
DM2
· · ·
DMm
Reference materials given by the product designer 1
Reference materials given by the product designer 2
· · ·
Reference materials given by the product designer m
A1*
A2*
Ar*
A* = ∪ Ai*
SAT ?
SAT
UNSAT
Directly have a collective constrained NCS model compatible with A*
Generate all MUSs of A*
Evaluate the reference materials that constitute all MUSs
Choose a reference material α among all the reference materials present in at least one MUS
Generate possible assignments of α such as no additional conflicts are generated
Update A* with the new assignment of α
Identify a collective assignment of α
Voting rule
Relative role of DMs
A*

FIG. 3

FIG. 4

Component and product requirements
Candidate materials overview
Consensus building
Selected materials
Component-oriented requirements
- Soft requirements
Young's modules
Ultimate strength
Yield strength
Elasticity
Fatigue
- Hard requirements
Creep resistance
Ductility
Hardness
Toughness
Machining ability
Product-oriented requirements
- Soft requirements
Cost
Gross Profit Margin
Net profit margin
Working capital
Current ratio
- Hard requirements
Leverage
Debt-to-equity ratio
Inventory turnover
Total asset turnover
Return on equity
Display Candidate materials

FIG. 5

Component and product requirements | **Candidate materials overview** | Consensus building | Selected materials

The femoral component

The tibial component

The patellar component

Candidate materials

| Materials | Tissue tolerance | Corrosion resistance | Tensile strength (MPa) | Fatigue strength (MPa) | Relative toughness | Relative wear resistance | Elastic modulus (GPa) | Specific gravity (g/cc) | Cost |
|---|---|---|---|---|---|---|---|---|---|
| Stainless steel 316 | 10 | 7 | 517 | 350 | 8 | 8 | 200 | 8 | 1 |
| Stainless steel 317 | 9 | 7 | 630 | 415 | 10 | 8.5 | 200 | 8 | 1.1 |
| Stainless steel 321 | 9 | 7 | 610 | 410 | 10 | 8 | 200 | 7.9 | 1.1 |
| Stainless steel 347 | 9 | 7 | 650 | 430 | 10 | 8.4 | 200 | 8 | 1.2 |
| Co-Cr alloys-Cast alloy-1 | 10 | 9 | 655 | 425 | 2 | 10 | 238 | 8.3 | 3.7 |
| Co-Cr alloys-Wrought alloy-2 | 10 | 9 | 896 | 600 | 10 | 10 | 242 | 9.1 | 4 |
| Unalloyed Titanium | 8 | 10 | 550 | 315 | 7 | 8 | 110 | 4.5 | 1.7 |
| Ti-6Al-4V | 8 | 10 | 985 | 490 | 7 | 8.3 | 124 | 4.4 | 1.9 |
| Composites (fabric reinforced)-Epoxy-0.7 glass | 7 | 7 | 680 | 200 | 3 | 7 | 22 | 2.1 | 3 |
| Composites (fabric reinforced) -Epoxy-0.63 carbon | 7 | 7 | 560 | 170 | 3 | 7.5 | 56 | 1.6 | 10 |
| Composites (fabric reinforced) -Epoxy-0.62 aramid | 7 | 7 | 430 | 130 | 3 | 7.5 | 29 | 1.4 | 5 |

Evaluate candidate materials

FIG. 6

Component and product requirements

Candidate materials overview

**Consensus building**

Selected materials

Designer 1

Mechanical engineer

Designer 2

Electrical engineer

Designer 3

Production engineer

FIG. 7

Component and product requirements | Candidate materials overview | **Consensus building** | Selected materials

Please give some materials an evaluation !
Explore the available materials and take an action

Designer 1

Mechanical engineer

**The femoral component**
The tibial component
The patellar component

Candidate materials

| Materials | Tissue tolerance | Corrosion resistance | Tensile strength (MPa) | Fatigue strength (MPa) | Relative toughness | Relative wear resistance | Elastic modulus (GPa) | Specific gravity (g/cc) |
|---|---|---|---|---|---|---|---|---|
| **Stainless steel 316** | **10** | **7** | **517** | **350** | **8** | **8** | **200** | **8** |
| Stainless steel 317 | 9 | 7 | 630 | 415 | 10 | 8.5 | 200 | 8 |
| Stainless steel 321 | 9 | 7 | 610 | 410 | 10 | 8 | 200 | 7.9 |
| Stainless steel 347 | 9 | 7 | 650 | 430 | 10 | 8.4 | 200 | 8 |
| Co-Cr alloys-Cast alloy-1 | 10 | 9 | 655 | 425 | 2 | 10 | 238 | 8.3 |
| Co-Cr alloys-Wrought alloy-2 | 10 | 9 | 896 | 600 | 10 | 10 | 242 | 9.1 |
| Unalloyed Titanium | 8 | 10 | 550 | 315 | 7 | 8 | 110 | 4.5 |
| Ti-6Al-4V | 8 | 10 | 985 | 490 | 7 | 8.3 | 124 | 4.4 |
| Composites (fabric reinforced)-Epoxy-0.7 glass | 7 | 7 | 680 | 200 | 3 | 7 | 22 | 2.1 |

Save preferences

FIG. 8

Materials evaluation
Stainless steel 316
Tissue tolerance
1.0
0.9
0.8
0.7
0.6
0.5
0.4
0.3
0.2
0.1
Corrosion resistance
Textile Strength (Mpa)
Fatigue Strength (Mpa)
Relative toughness
Relative wear resistance
Elastic Modulus (GPa)
Specific gravity (g/cc)
Accepted
Rejected

FIG. 8 (Continued)

Component and product requirements

Candidate materials overview

**Consensus building**

Selected materials

Consensus Building

Designer 1

Designer 2

Designer 3

Mechanical engineer

Electrical engineer

Production engineer

Learn a collective evaluation model

60%

FIG. 9

Component and product requirements
Candidate materials overview
Consensus building
Selected materials
Consensus Building
Non-restored reference materials
Stainless steel 317
Tissue tolerance
Corrosion resistance
Textile Strength (Mpa)
Fatigue Strength (Mpa)
Relative toughness
Relative wear resistance
Elastic Modulus (GPa)
Specific gravity (g/cc)
1.0
0.9
0.8
0.7
0.6
0.5
0.4
0.3
0.2
0.1
Stainless steel 347
Tissue tolerance
Corrosion resistance
Textile Strength (Mpa)
Fatigue Strength (Mpa)
Relative toughness
Relative wear resistance
Elastic Modulus (GPa)
Specific gravity (g/cc)
1.0
0.9
0.8
0.7
0.6
0.5
0.4
0.3
0.2
0.1
Preference information
Collective assignment of the chosen reference material


FIG. 10

Ti-6Al-4V
Tissue tolerance
1.0
0.9
0.8
0.7
0.6
0.5
0.4
0.3
0.2
0.1
Corrosion resistance
Textile Strength (Mpa)
Fatigue Strength (Mpa)
Relative toughness
Relative wear resistance
Elastic Modulus (GPa)
Specific gravity (g/cc)


FIG. 10 (Continued)

Component and product requirements
Candidate materials overview
Consensus building
Selected materials
Consensus Building
Non-restored reference materials
Preference information
Stainless steel 317
Tissue tolerance
1.0
0.9
0.8
0.7
0.6
0.5
0.4
0.3
0.2
0.1
Corrosion resistance
Specific gravity (g/cc)
Elastic Modulus (GPa)
Textile Strength (Mpa)
Relative wear resistance
Fatigue Strength (Mpa)
Relative toughness
Designer 1
Designer 2
Designer 3
Rejected
Rejected
Rejected
Accepted
Accepted
Accepted
Collective assignment of the chosen reference material

FIG. 11

Component and product requirements
Candidate materials overview
Consensus building
Selected materials
Consensus building
Non-restored reference materials
Preference information
Collective assignment of the chosen reference material
Stainless steel 317
Tissue tolerance
1.0
0.9
0.8
0.7
0.6
0.5
0.4
0.3
0.2
0.1
Corrosion resistance
Textile Strength (Mpa)
Fatigue Strength (Mpa)
Relative toughness
Relative wear resistance
Elastic Modulus (GPa)
Specific gravity (g/cc)
Compute the collective assignment of chosen reference material
100%
Based on te voting rule, the reference material will we assigned to:
Rejected

FIG. 12

Component and product requirements

Candidate materials overview

Consensus building

**Selected materials**

The femoral component

Co-Cr alloys

Explore

The tibial component

Ti alloys

Explore

The patellar component

Ultra-high molecular weight polyethylene

Explore

FIG. 13

1000
1010
CPU
1070
RAM
1020
Mass storage
devices controler
Display
1080
B
U
S
1030
Hard
drive
Haptic
device
1090
Network Adapter
Video
RAM
1050
1100
Network
GPU
1110
1060

FIG. 14

# EUROPEAN SEARCH REPORT

Application Number
EP 23 30 5499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/180466 A1 (THE PLASTIC ECONOMY LTD [GB]) 26 September 2019 (2019-09-26)<br>* figures 10,11 *<br>* page 3, lines 7-11 *<br>* page 16, lines 17-20 *<br>* page 19, line 20 - page 24, line 23 *<br>* page 27, lines 11-15 *<br>* page 4, lines 11-17 *<br>----- | 1-15 | INV.<br>G06Q10/063<br>G06Q50/04 |
| A | DESAI S ET AL: "Cyber-enabled concurrent material and process selection in a flexible design for manufacture paradigm", THE INTERNATIONAL JOURNAL OF ADVANCED MANUFACTURING TECHNOLOGY, SPRINGER, LONDON, vol. 97, no. 5, 1 May 2018 (2018-05-01), pages 1719-1731, XP036536751, ISSN: 0268-3768, DOI: 10.1007/S00170-018-2034-6 [retrieved on 2018-05-01]<br>* Sections 1-3 *<br>----- | 1-15 | |
| | | | TECHNICAL FIELDS SEARCHED (IPC) |
| A | TLILI ALI ET AL: "Learning non-compensatory sorting models using efficient SAT/MaxSAT formulations", EUROPEAN JOURNAL OF OPERATIONAL RESEARCH, ELSEVIER, AMSTERDAM, NL, vol. 298, no. 3, 19 August 2021 (2021-08-19), pages 979-1006, XP086916305, ISSN: 0377-2217, DOI: 10.1016/J.EJOR.2021.08.017 [retrieved on 2021-08-19]<br>* the whole document *<br>----- | 4,5,7 | G06Q |

The present search report has been drawn up for all claims

1

| Place of search | Date of completion of the search | Examiner |
|---|---|---|
| Munich | 29 August 2023 | Gabriel, Christiaan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 30 5499

This annex lists the patent family members relating to the patent documents cited in the above-mentioned European search report. The members are as contained in the European Patent Office EDP file on The European Patent Office is in no way liable for these particulars which are merely given for the purpose of information.

29-08-2023

| Patent document cited in search report | Publication date | Patent family member(s) | Publication date |
|---|---|---|---|
| WO 2019180466 A1 | 26-09-2019 | GB 2572327 A | 02-10-2019 |
| | | WO 2019180466 A1 | 26-09-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ALI JAHAN ; KEVIN L. EDWARDS ; MARJAN BAHRAMINASAB.** Materials selection in the context of design problem-solving. Butterworth-Heinemann, 2016, 25-40
- **JAHAN, ALI ; KEVIN L EDWARDS.** Multi-Criteria Decision Analysis for Supporting the Selection of Engineering Materials in Product Design. Elsevier Science & Technology, 2013
- Quantitative methods of materials selection. **FARAG, M.M.** Handbook of Materials Selection. John Wiley & Sons, 2002
- **LEITE, M. ; SILVA, A. ; HENRIQUES, E. et al.** Materials selection for a set of multiple parts considering manufacturing costs and weight reduction with structural isoperformance using direct multisearch optimization. *Struct Multidisc Optim,* 2015, vol. 52, 635-644
- Overview of the Materials Selection Process. **DIETER, G.E.** ASM Metals Handbook, Materials Selection and Design. ASM International, 1997
- **JAHAN, ALI ; EDWARDS, KEVIN ; BAHRAMINASAB, MARJAN.** *The importance of decision support in materials selection,* 2016
- **B. ROY.** Multicriteria Methodology for Decision Aiding. Kluwer Academic, 1996
- **M. KHALILZADEH ; A. KARAMI ; ALBORZ HAJIKHANI.** The multi-objective supplier selection problem with fuzzy parameters and solving the order allocation problem with coverage. *Journal of Modelling in Management,* 2020, vol. 15, 705-725
- **ANA PAULA HENRIQUES DE GUSMÃO ; C. MEDEIROS.** A model for selecting strategic information system using the fitradeoff. *Mathematical Problems in Engineering,* 2016, vol. 2016, 1-7
- **O. SOBRIE ; M. E. A. LAZOUNI ; S. MAHMOUDI ; V. MOUSSEAU ; M. PIRLOT.** A new decision support model for preanesthetic evaluation. *Computer Methods and Programs in Biomedicine,* 2016, vol. 133, 183-193
- **BOUYSSOU, D. ; MARCHANT, T.** An axiomatic approach to noncompensatory sorting methods in MCDM, I: the case of two categories. *European Journal of Operational Research,* 2007, vol. 178 (1), 217-245
- **BOUYSSOU, D. ; MARCHANT, T.** An axiomatic approach to noncompensatory sorting methods in MCDM, II: more than two categories. *European Journal of Operational Research,* 2007, vol. 178 (1), 246-276
- Aide multicritère à la decision dans le cadre de la problématique du tri: méthodes et applications. **YU, W.** Ph.D. thesis. Université Paris Dauphine, 1992